Europäisches Patentamt

European Patent Office

Office européen des brevets

(11) Publication number: **0 191 519 B2**

# NEW EUROPEAN PATENT SPECIFICATION

(45) Date of publication of the new patent specification:
12.10.94

(51) Int. Cl.5: **A23L 1/22**, A23L 1/221,
A23D 7/00, A23D 9/00

(21) Application number: **86200102.1**

(22) Date of filing: **23.01.86**

(54) **Fat product with improved aroma and process for preparing it.**

(30) Priority: **11.02.85 NL 8500366**

(43) Date of publication of application:
**20.08.86 Bulletin  86/34**

(45) Publication of the grant of the patent:
**10.08.88 Bulletin  88/32**

(45) Mention of the opposition decision:
**12.10.94 Bulletin  94/41**

(84) Designated Contracting States:
**AT BE CH DE FR GB IT LI NL SE**

(56) References cited:
EP-A- 0 074 140
GB-A- 1 200 450
US-A- 3 460 948

**Kirk Othmer. Enc. of Chemical Technology.3rd edition. vol. 16 p 332.**

**Pakistan Journal of Scientific Industrial Research vol. 22 no. 4. 1979. pp 205-207.**

**Phytochemistry vol. 6 pp. 25-32. 1967.**

**Kefford et al. Advances in food research 1970.Supplement 2 pp. 85-103**

(73) Proprietor: **UNILEVER N.V.**
**Weena 455**
**NL-3013 AL Rotterdam (NL)**
(84) Designated Contracting States:
**BE CH DE FR IT LI NL SE AT**

(73) Proprietor: **UNILEVER PLC**
**Unilever House**
**Blackfriars**
**P.O. Box 68**
**London EC4P 4BO (GB)**
(84) Designated Contracting States:
**GB**

(72) Inventor: **Begemann, Willem Johan**
**van Tedingerbrouckstraat 20**
**NL-2596 PC The Hague (NL)**
Inventor: **Harkes, Pieter Daniel**
**Willem Frederikstraat 50**
**NL-3136 BR Vlaardingen (NL)**

(74) Representative: **Dries, Antonius Johannes Maria et al**
**Unilever N.V. Patent Division**
**P.O. Box 137**
**NL-3130 AC Vlaardingen (NL)**

Fenaroli s handbook of Flavour Ingredients 2nd edition. vol. 2 1971 pp 87,88, 236-238.

Parfumerie, Cosmetique, Savons vol. 12. pp 334-342. 1969.

**Description**

The invention relates to the preparation of a fat product with improved aroma during cooking. Although in general both odour and taste are meant by aroma, in this specification especially the odour of a product is meant by the use of the term "aroma".

It is known to add essential oils to fat products for improving the aroma. Thus, in U.S. patent specification (US-A) 3 460 948 (Lever Brothers Comp.) a method for frying foodstuffs is disclosed in which an edible fat is used containing about 100 to about 1000 parts of citrus oil per million parts of triglyceride fat. Mentioned as examples of the citrus oils are orange oil, lemon oil, lime oil and (semi-) synthetic citrus oils.

Further, in British patent specification (GB-A) 1 200 450 (Unilever Ltd) the use of 25 to 1000 parts per million of an essential oil other than citrus oil in cooking fats is disclosed, optionally together with the aforementioned citrus oils. Mentioned as examples of the essential oils meant are fennel oil, thyme oil, peppermint oil, nutmeg oil, cinnamon oil, clove oil, parsley oil, angelica oil, sage oil, marjoram oil, rosemary oil, savory oil, mace oil, onion oil, garlic oil, leek oil, mustard oil, spearmint oil, coriander oil, cardamom oil, cassia oil, turmeric oil, celery oil, tarragon oil and aniseed oil, while mandarine oil is mentioned as additional example of a citrus oil.

Preferably, use is made of essential oils obtained from culinary herbs such as thyme, sage, marjoram and peppermint. The alliaceous oils (garlic, onion and leek) and spice oils (cinnamon, clove and mace) are only recommended for special oils which are allowed to possess a characteristic aroma, for example for an oil which can also be used in a dressing. In the examples, 25-50 mg/kg of non-citrus essential oils are used, possibly together with 200-300 mg/kg of citrus oil. These additions do not contain appreciable amounts of linaloöl (3.7-dimethyl-1,6-octadien-3-ol) and linalyl acetate (linaloöl acetate = linareol acetate).

Both patent specifications mentioned above aim at decreasing the formation of undesirable secondary odours which normally arise during frying. In practice, the above specifications disclose that fairly large amounts of the above-mentioned essential oils have to be added in order to have sufficient effect. However, this has the disadvantage that the particular and/or peculiar aroma of the essential oils is often too dominating, as a result of which the fat product has an unnatural aroma. If the amount of added essential oil is decreased, the effect cannot be noticed with certainty or is insufficient. Thus it remained desirable to find an agent that in low concentration is effective to mask the secondary odours which normally arise during frying, e.g. shallow frying, and still impart so little of their own aroma to the product that the fat product or the food fried therewith acquires no unnatural odour or taste.

It has now been found that this desired effect can be achieved by adding an effective amount of both linalyl acetate and linaloöl to the fat product. Consequently, the invention provides a a fat product having an improved aroma during cooking, which fat product is characterized in that it contains an effective amount of both linaloöl and linalyl acetate and in that the weight ratio of linalool to linalyl acetate is from 2:1 to 1:10. Suitably the fat product contains from 0.5-50 mg of linaloöl and linalyl acetate taken together per kg of fat product. Preferably the fat product contains from 1 to 25 mg of linaloöl and linalyl acetate taken together per kg of fat product.

The combination of linaloöl and linalyl acetate generally contains both constituents in weight ratios between 1 : 100 and 100 : 1. It is possible to use pure linalyl acetate and pure linaloöl, e.g. prepared synthetically. However, it is also possible to use natural essential oils or fractions thereof which contain both compounds in a significant amount, i.e. for at least 20 % of both compounds together. Examples of such essential oils are bergamot oil (from Citrus Bergamen), Mentha Citrata (Bergamot-Mint), Clary Sage (from Salvia Sclarea). The composition of bergamot oil varies considerably in commercially available products, having contents from about 5 - 35 % linaloöl and about 20 - 55 % linalyl acetate, the sum of both varying from about 25 - 70 % (cf. also Table 2 in SOFW 107 [1981, 13] 363 - 369). In order to reach the required amount of linalyl acetate and linaloöl in the fat product, from about 1 to 100 mg/kg of these oils or fractions thereof can be incorporated in the fat product.

Preferably, linaloöl and linalyl acetate are used in weight ratios of 1 : 1 to 1 : 5.

By fat products are to be understood usual liquid triglyceride oils which can be used as salad oil, as cooking oil or deep-frying oil, but also fats and shortenings which are used for cooking or frying purposes. Emulsions, such as butter, margarine, reduced-fat spreads and other low-calorie fat emulsions, can also be used, because these fat products are generally used not only as spreads for bread but are also often used for frying foodstuffs such as meat, eggs, fish, slices of bread and many others. In a preferred embodiment of the invention, frying oil is improved by incorporating both linaloöl and linalyl acetate.

The invention further provides a method for cooking or deep-frying foodstuffs in a fat product, which is characterized in that a fat product as described above having an effective amount of linaloöl and linalyl

3

EP 0 191 519 B2

acetate. If such a fat product is used for the deep-frying of, for example, potato sticks for the preparation of French fried potatoes or for deep-frying fish in a container in which the foodstuffs to be deepfried are immersed, a somewhat higher dosage of linaloöl and linalyl acetate e.g. from 25 - 50 mg/kg, can be used, which is higher than indicated as preferred range, because with such deep-frying treatments the fat product is often used several times after each other. The higher dose has the consequence that also after deep-frying several times an odour improvement still persists. For the use for cooking in a frying pan, for which the fat product is mostly used only once, a low dose of linaloöl and linalyl acetate is sufficient. In this latter method the foodstuff is heated in a container in a thin layer of generally a few millimetres of fat ("shallow frying"). For this, both fat products practically free of water and water-in-oil emulsions can be used.

In another embodiment of the present invention a foodstuff is provided which has been obtained by frying in a fat product containing both linaloöl and linalyl acetate.

The invention is illustrated with the following examples.

## Example I

40 mg/kg grapefruit oil and 100 mg/kg turmeric extract were added to refined soyabean oil in accordance with the process described in British patent specification (GB-A) 1 200 450. This oil (B) and the soyabean oil without additive (A) were used for comparison. 5 mg/kg linaloöl and 5 mg/kg linalyl acetate (sample C) were added to oil (B). The result of the odour assessment by a trained test panel after heating of the oils for some time at 140 - 145° C was as follows:

| | | | After heating at 140 - 145°C | | | | | | |
|---|---|---|---|---|---|---|---|---|---|
| | | for | 5 | 10 | 15 | 20 | 25 | 30 | min. |
| (A) | soyabean oil | | 2 | 2 | 3 | 4 | 4 | 4 | |
| (B) | soyabean oil + 40 mg/kg grapefruit oil + 100 mg/kg turmeric extract (GB 1 200 450) | | 1 | 1-2 | 2 | 3 | 3 | 4 | |
| (C) | (A) + 5 mg linaloöl + 5 mg linalyl acetate per kg soyabean oil | | 1 | 1 | 1 | 1 | - | 2 | |

1 : still good odour; no secondary odours
2 : weakly irritating odour
3 : irritating odour
4 : strongly irritating and metallic, fishy
- : not determined
The sample (C) is compared with (B).

From this it appears that the addition of 10 mg/kg of a 1 : 1 mixture of linaloöl and linalyl acetate delays the formation of secondary odours for at least 20 minutes.

For practical conditions, especially when shallow frying, this is a considerable improvement.

## Example II

A mixture of essential oils was added to a commercially available frying oil in such a way that the frying oil contained 40 mg/kg grapefruit oil, 100 mg/kg turmeric extract and 40 mg/kg bergamot oil.

The bergamot oil contained about 60 % linaloöl and about 22 % linalyl acetate, so that the frying oil contained about 2.5 mg/kg linaloöl and about 9 mg/kg linalyl acetate.

Upon heating at 120° C, the product had a weakly citrus odour. After heating at 140 - 145° C, the odour only became slightly irritating after 20 minutes, whereas the frying oil without bergamot oil already became slightly irritating after 5-10 minutes.

4

**Examples III-V**

By the method described in Example 1, to a commercially available sunflower oil (sample H) were added

| 40 mg bergamot oil* | per kg sunflower oil (sample I) |
|---|---|
| 20 mg mentha citrate** | per kg sunflower oil (sample J) |
| 10 mg clarey sage*** | |
| | per kg sunflower oil (sample K) |

\* Bergamot oil contained 6 % linaloöl and 22 % linalyl acetate.
\** Mentha citrate contained 36 % linalöl and 46 % linalyl acetate.
\*** Clary sage contained 25 % linaloöl and 68 % linalyl acetate.

After heating the samples H - K to a temperature between 140 and 145°C for an increasing period of time, the odour of the warm oil was tested by a trained test panel and the odour perception was recorded. The results are tabulated below.

| | Heating time (in minutes) | | | | | |
|---|---|---|---|---|---|---|
| | 10 | 20 | 25 | 30 | 35 | 40 |
| (H) sunflower oil | 2 | 3 | 3 | 3 | 3 | 3 |
| (I) (H) + bergamot oil | 1 | 1 | 1 | 1 | 2 | 2 |
| (J) (H) + mentha citrate | 1 | 1 | 1 | 2 | 2 | 3 |
| (K) (H) + clary sage | 1 | 1 | 1-2 | 2 | 2-3 | 3 |

1 : good odour, no secondary odour
2 : slightly irritating
3 : irritating.

The above data show that the incorporation of certain essential oils which contain linaloöl and linalyl acetate in the appropriate amount are able to delay/suppress the formation of secondary or off odours.

**Claims**

1. A fat product, characterized in that it contains linaloöl and linalyl acetate in a weight ratio of 2:1 to 1:10 and both linalool and linalyl acetate in an effective amount to delay the formation of undesired secondary flavours upon cooking.

2. A fat product according to claim 1, characterized in that it contains 0.5 - 50 mg of linaloöl and linalyl acetate taken together per kg of fat product.

3. A fat product according to claim 1 or 2, characterized in that it contains 1 - 25 mg of linaloöl and linalyl acetate taken together per kg of fat product.

4. A fat product according to claim 3, characterized in that the weight ratio is from 1 : 1 to 1 : 5.

5. A fat product according to any of the claims 1 - 4 characterized in that it contains bergamot oil or a fraction thereof as a source of linaloöl and linalyl acetate.

6. A fat product according to any of the preceding claims, characterized in that the fat product is a frying oil.

7. A method for preparing a fat product with a delayed tendency to develop undesired odours upon cooking, characterized in that an effective amount of both linaloöl and linalyl acetate is incorporated in the fat product.

**8.** A method for cooking foodstuffs, characterized in that a fat product according to any of the claims 1 to 7 is used.

**9.** A foodstuff cooked in a fat product according to any of the claims 1 - 8.

**Patentansprüche**

**1.** Fettprodukt, dadurch gekennzeichnet, daß es Linalool und Linalylacetat in einem Gewichtsverhältnis von 2:1 bis 1:10 und sowohl Linalool als auch Linalylacetat in einer wirksamen Menge enthält, um beim Kochen die Bildung unerwünschter Sekundäraromen zu verzögern.

**2.** Fettprodukt nach Anspruch 1, dadurch gekennzeichnet, daß es 0,5 bis 50 mg Linalool und Linalylacetat, zusammengenommen, pro kg Fettprodukt enthält.

**3.** Fettprodukt nach Anspruch 1 oder 2, dadurch gekennzeichnet, daß es 1 bis 25 mg Linalool und Linalylacetat, zusammengenommen, pro kg Fettprodukt enthält.

**4.** Fettprodukt nach irgendeinem der Ansprüche 1 bis 3, dadurch gekennzeichnet, daß das Gewichtsverhältnis 1:1 bis 1:5 beträgt.

**5.** Fettprodukt nach irgendeinem der Ansprüche 1 bis 4, dadurch gekennzeichnet, daß es eine Bergamottessenz oder eine Fraktion davon als Quelle des Linalools und Linalylacetats enthält.

**6.** Fettprodukt nach irgendeinem der vorhergehenden Ansprüche, dadurch gekennzeichnet, daß das Fettprodukt ein Bratöl ist.

**7.** Verfahren zur Herstellung eines Fettproduktes verzögerter Tendenz zur Entwicklung unerwünschter Gerüche beim Kochen, dadurch gekennzeichnet, daß dem Fettprodukt eine wirksame Menge sowohl an Linalool als auch an Linalylacetat einverleibt wird.

**8.** Verfahren zum Kochen von Lebensmitteln, dadurch gekennzeichnet, daß ein Fettprodukt nach irgendeinem der Ansprüche 1 bis 6 verwendet wird.

**9.** Lebensmittel, gekocht in einem Fettprodukt nach irgendeinem der Ansprüche 1 bis 6.

**Revendications**

**1.** Produit gras, caractérisé en ce qu'il comprend du linalol et de l'acétate de linalyle dans un rapport pondéral de 2:1 à 1:10, en une quantité efficace pour retarder la formation d'arômes secondaires indésirables lors d'une cuisson.

**2.** Produit gras selon la revendication 1, caractérisé en ce qu'il contient de 0,5 à 50 mg de linalol et d'acétate de linalyle ensemble par kg de produit gras.

**3.** Produit gras selon la revendication 1 ou 2, caractérisé en ce qu'il contient de 1 à 25 mg de linalol et d'acétate de linalyle ensemble par kg de produit gras.

**4.** Produit gras selon l'une quelconque des revendications 1 à 3, caractérisé en ce que le rapport pondéral est de 1:1 à 1:5.

**5.** Produit gras selon l'une quelconque des revendications 1 à 4, caractérisé en ce qu'il contient de l'essence de bergamote ou une fraction de celle-ci comme source de linalol et d'acétate de linalyle.

**6.** Produit gras selon l'une quelconque des revendications précédentes, caractérisé en ce que le produit gras est une huile de friture.

**7.** Procédé de préparation d'un produit gras ayant une tendance retardée à dégager des odeurs indésirables lors d'une cuisson, caractérisé en ce qu'on incorpore une quantité efficace de linalol et d'acétate de linalyle ensemble dans le produit gras.

8. Procédé de cuisson de produits alimentaires, caractérisé en ce qu'on utilise un produit gras selon l'une quelconque des revendications 1 à 6.

9. Produit alimentaire cuit dans un produit gras selon l'une quelconque des revendications 1 à 6.